# EUROPÄISCHE PATENTSCHRIFT

(11) **EP 4 347 360 B1**
(45) Veröffentlichungstag und Bekanntmachung des Hinweises auf die Patenterteilung: **04.11.2026**
(21) Anmeldenummer: 22727058.4
(22) Anmeldetag: 02.05.2022
(51) Int. Cl.: B62D 25/04, B62D 25/02

(54) **KRAFTFAHRZEUGKAROSSERIE MIT EINER SEITENTEILSTRUKTUR, INSBESONDERE A-SÄULE, SOWIE VERFAHREN ZUR MONTAGE EINER KRAFTFAHRZEUGKAROSSERIE MIT EINER SOLCHEN SEITENTEILSTRUKTUR**
MOTOR VEHICLE BODY WITH A SIDE PART STRUCTURE, IN PARTICULAR A A-PILLAR, AND METHOD FOR ASSEMBLING A MOTOR VEHICLE BODY WITH SUCH A SIDE PART STRUCTURE
CARROSSERIE DE VÉHICULE AUTOMOBILE AVEC UNE STRUCTURE DE PARTIE LATÉRALE, EN PARTICULIER UN PIED AVANT, ET PROCÉDÉ DE MONTAGE D'UNE CARROSSERIE DE VÉHICULE AUTOMOBILE AVEC UNE TELLE STRUCTURE DE PARTIE LATÉRALE

(30) Priorität: 02.06.2021 DE 102021205634
(43) Veröffentlichungstag der Anmeldung: 10.04.2024
(73) Patentinhaber: VOLKSWAGEN AKTIENGESELLSCHAFT, 38440 Wolfsburg (DE)
(72) Erfinder: SCHWERING, Christian, 49744 Groß Hesepe (DE); PAULSEN, Thomas, 38448 Wolfsburg (DE)
(86) Internationale Anmeldenummer: PCT/EP2022/061673
(87) Internationale Veröffentlichungsnummer: WO 2022/253502

(56) Entgegenhaltungen:
- JP-A- H09 226 622
- JP-B2- 6 256 520
- US-A1- 2009 140 551
- US-B2- 6 942 277
- US-B2- 8 919 868

## Beschreibung

Die Erfindung betrifft eine Kraftfahrzeugkarosserie mit einer Seitenteilstruktur gemäß dem Oberbegriff des Anspruchs 1, insbesondere eine Seitenteilstruktur mit einer A-Säule. Ferner betrifft die Erfindung ein Verfahren zur Montage einer Kraftfahrzeugkarosserie mit einer solchen Seitenteilstruktur.

Aus DE 10 2014 112 138 A1 ist eine Kraftfahrzeugkarosserie in Mischbauweise sowie ein Verfahren zur Herstellung einer Kraftfahrzeugkarosserie in Mischbauweise bekannt. Dabei ist auch eine Kraftfahrzeugkarosserie mit einer Seitenteilstruktur offenbart, die einen Schweller, eine A-Säule und einen seitlichen Dachrahmen umfasst. Die Druckschrift befasst sich insbesondere mit der Verbindung zwischen einer ringformartig ausgebildeten Seitenteilstruktur und einer Fahrzeugbodenstruktur. Ein Türscharnier-Verstärkungselement und konstruktive Details zur Gestaltung der A-Säule in einem Bereich, in welchem ein solches Türscharnier-Verstärkungselement angeordnet sein soll, sind nicht offenbart.

Aus EP 2 868 553 A1 ist eine Kraftfahrzeugkarosseriestruktur mit einer A-Säule bekannt, die aus einer Säulen-Innenschale und einer Säulen-Außenschale gebildet ist, wobei die Schalen zu einem geschlossenen Profil gefügt sind, indem in Fahrzeuglängsrichtung nach vorne ein vorderseitiger Verbindungsflansch und in Fahrzeuglängsrichtung nach hinten ein rückseitiger Verbindungsflansch gebildet sind. Die Druckschrift befasst sich insbesondere mit der Gestaltung einer Stirnwand und weiteren, in Fahrzeuglängsrichtung vor der A-Säule angeordneten Elementen zum Schutz des vorderseitigen Verbindungsflansches. Ein Türscharnier-Verstärkungselement und konstruktive Details zur Gestaltung der A-Säule in einem Bereich, in welchem ein solches Türscharnier-Verstärkungselement angeordnet sein soll, sind nicht offenbart.

Aus DE 10 2010 034 939 A1 ist eine Kraftfahrzeugkarosserie mit einer seitlichen Stirnwand, einer äußeren Seitenwand und einem Winkelblech bekannt. Ferner wird auf ein Kraftfahrzeug mit einer solchen Kraftfahrzeugkarosserie sowie auf ein Verfahren zum Zusammenbau einer solchen Kraftfahrzeugkarosserie verwiesen. Das Dokument befasst sich im Wesentlichen mit der Anordnung und Verbindung des Winkelblechs relativ zu der seitlichen Stirnwand und der äußeren Seitenwand. Ein Türscharnier-Verstärkungselement und konstruktive Details zur Gestaltung der A-Säule in einem Bereich, in welchem ein solches Türscharnier-Verstärkungselement angeordnet sein soll, sind nicht offenbart.

Aus JP H09 226622 A ist eine Kraftfahrzeugkarosserie mit einer Seitenteilstruktur bekannt, die eine Säulen-Außenschale, eine mit der Säulen-Außenschale verbundene Säulen-Innenschale und ein in einem Zwischenraum zwischen der Säulen-Außenschale und der Säulen-Innenschale angeordnetes Verstärkungselement aufweist. Das Verstärkungselement ist aus mehreren Einzelelementen gebildet und mit dem Nachteil verbunden, dass zur Herstellung der Seitenteilstruktur eine Vielzahl von Fertigungsschritten durchgeführt werden müssen.

Aus US 8 919 868 B2 ist eine Kraftfahrzeugkarosserie mit den Merkmalen des Oberbegriffs von Anspruch 1 bekannt.

Der Erfindung liegt die Aufgabe zugrunde, eine Kraftfahrzeugkarosserie mit einer Seitenteilstruktur, insbesondere mit einer A-Säule, sowie ein Verfahren zur Montage einer Kraftfahrzeugkarosserie mit einer solchen Seitenteilstruktur zur Verfügung zu stellen, welche eine einfache und somit kostengünstige Montage dieser Elemente ermöglichen.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Eine erfindungsgemäße Kraftfahrzeugkarosserie mit einer Seitenteilstruktur umfasst zumindest teilweise eine Säulen-Außenschale, eine mit der Säulen-Außenschale verbundene Säulen-Innenschale und ein in einem Zwischenraum zwischen der Säulen-Außenschale und der Säulen-Innenschale angeordnetes Türscharnier-Verstärkungselement. Dabei sind die Säulen-Innenschale und die Säulen-Außenschale derart ausgebildet, dass der Zwischenraum in dem in Endmontagelage zueinander gebrachten Zustand der Säulen-Innenschale und der Säulen-Außenschale eine unmittelbar zu dem Bereich des Türscharnier-Verstärkungselements führende Zugangsöffnung aufweist. Eine solche Zugangsöffnung ist in Fahrzeuglängsrichtung nach vorne orientiert und dadurch gebildet, dass die Säulen-Innenschale und die Säulen-Außenschale zumindest in einem sich über einen Teilbereich des Türscharnier-Verstärkungselements erstreckenden Horizontalschnitt eine u-förmige Geometrie aufweisen, wobei die Schenkel des "U" der Geometrie in Fahrzeuglängsrichtung nach vorne orientiert sind. Insbesondere betrifft eine solche Kraftfahrzeugkarosserie eine Säulen-Außenschale und eine Säulen-Innenschale einer A-Säule eines Kraftfahrzeuges. Eine derartig ausgebildete Kraftfahrzeugkarosserie hat den Vorteil, dass das Türscharnier-Verstärkungselement nach der Montage von Säulen-Innenschale und Säulen-Außenschale durch die Zugangsöffnung noch gut zugänglich ist und sich daher mit einem kostengünstig realisierbaren Fertigungsverfahren montieren und/oder fixieren lässt. Insbesondere wird in diesem Zusammenhang auf Fertigungsverfahren verwiesen, die eine zweiseitige Zugänglichkeit erfordern, wie z.B. das Verschweißen mit zangenartigen Schweißvorrichtungen oder das Vernieten. Die Ausbildung einer derartigen Karosserie hat den weiteren Vorteil, dass sich ein verbessertes Crashverhalten erzeugen lässt, insbesondere in Frontcrashlastfällen. Ein solches verbessertes Crashverhalten ergibt sich insbesondere dann, wenn die Säulen-Außenschale und die Säulen-Innenschale nicht unmittelbar miteinander, sondern nur mittelbar über ein weiteres Zusatzelement verbunden werden, wobei das Zusatzelement dann erst die Zugangsöffnung verschließt.

In einer praktischen Ausführungsform einer erfindungsgemäßen Kraftfahrzeugkarosserie sind die Säulen-Außenschale und die Säulen-Innenschale Teil einer A-Säule eines Kraftfahrzeuges, und das Türscharnier-Verstärkungselement ist im unteren Bereich der A-Säule angeordnet. Dementsprechend erstreckt sich auch die Zugangsöffnung zumindest über den unteren Bereich der A-Säule. Die Zugangsöffnung ist vorzugsweise in der unteren Hälfte, weiter bevorzugt im unteren Drittel der A-Säule angeordnet. Sie kann sich aber auch über die gesamte Höhe der A-Säule erstrecken.

Das Türscharnier-Verstärkungselement ist vorzugsweise oberhalb eines Seitenschwellers angeordnet. Insbesondere wird insoweit auf Konstruktionen verwiesen, in welchen der Seitenschweller als Hohlprofil ausgebildet ist, insbesondere derart, dass in dem an die A-Säule angrenzenden Abschnitt des Seitenschwellers ein Seitenschweller-Verstärkungselement angeordnet ist. Das Türscharnier-Verstärkungselement ist dann vorzugsweise oberhalb des Seitenschwellers angeordnet. Besonders bevorzugt ist eine Anordnung, in welcher das Türscharnier-Verstärkungselement unmittelbar oberhalb des Seitenschwellers angeordnet ist, vorzugsweise unmittelbar an ein in dem Seitenschweller angeordnetes Seitenschweller-Verstärkungselement angrenzend.

In einer weiteren praktischen Ausführungsform ist das Türscharnier-Verstärkungselement mittels einer Verbindungstechnik, die eine zweiseitige Zugänglichkeit erfordert, mit der Säulen-Außenschale und/oder mit der Säulen-Innenschale verbunden. Diesbezüglich wird insbesondere auf Verschweißen, insbesondere Punktschweißen, Vernieten, aber auch Verkleben verwiesen. Alternativ oder in Ergänzung wird auch auf andere stoffschlüssige, formschlüssige und/oder kraftschlüssige Verbindungstechniken verwiesen, insbesondere solche, die nur aufgrund der guten Zugänglichkeit durch die Zugangsöffnung möglich sind bzw. sich aufgrund der Zugangsöffnung einfach und kostengünstig umsetzen lassen.

Es ist bevorzugt, wenn der Zwischenraum in Fahrzeuglängsrichtung von vorne her zugänglich ist, denn dann lässt sich ein Türscharnier-Verstärkungselement, insbesondere wenn es sich um ein U-Profil handelt, gut mit einem Werkzeug greifen, um es einzusetzen und während der Montage in Soll-Position zu halten, bis die Montage abgeschlossen ist. Dies gilt insbesondere für Anwendungsfälle, in welchen als Türscharnier-Verstärkungselement ein U-Profil mit zusätzlichen Anlageflanschen eingesetzt ist, dessen Profil-Erstreckungsrichtung in Fahrzeuglängsrichtung orientiert ist. In solchen Anwendungsfällen kann das U-Profil an den Schenkeln gehalten werden, wobei die Fixierung des U-Profils über die Anlageflansche und die durch die Schenkel beabstandete Deckfläche erfolgen, insbesondere derart, dass die Anlageflansche gegenüber der Säulen-Innenschale und die Deckfläche gegenüber der Säulen-Außenschale fixiert wird oder umgekehrt.

Die Crashperformance bei Frontcrashlastfällen einer erfindungsgemäßen Kraftfahrzeugkarosserie kann verbessert werden, wenn die Säulen-Außenschale an dem in Fahrzeuglängsrichtung betrachtet vorderen Ende einen sich in Fahrzeugquerrichtung und in Fahrzeughochrichtung erstreckenden Außenschalen-Anlageflansch und/oder die Säulen-Innenschale an dem in Fahrzeuglängsrichtung betrachtet vorderen Ende einen sich in Fahrzeugquerrichtung und in Fahrzeughochrichtung erstreckenden Innenschalen-Anlageflansch aufweist. Dabei hat es sich in Verbindung mit einer gut zugänglichen Zugangsöffnung als besonders vorteilhaft erwiesen, wenn ein Außenschalen-Anlageflansch in Fahrzeugquerrichtung nach fahrzeugaußen orientiert ist und ein Innenschalen-Anlageflansch in Fahrzeugquerrichtung nach fahrzeuginnen orientiert ist, weil dann die Zugangsöffnung aufgrund des jeweiligen Flansches nicht in der Breite verringert ist.

In einer weiteren praktischen Ausführungsform einer erfindungsgemäßen Kraftfahrzeugkarosserie ist der Zwischenraum zumindest im Bereich des Türscharnier-Verstärkungselements im Endmontagezustand vorderseitig durch ein sich in Fahrzeugquerrichtung und in Fahrzeughochrichtung erstreckendes Zusatzelement verschlossen. Bei diesem Zusatzelement handelt es sich insbesondere um ein sich nur über einen Bruchteil der Fahrzeugbreite erstreckendes Element, wie beispielsweise ein Radhauselement. Es kann sich bei dem Zusatzelement aber auch um ein sich über einen Großteil der Breite erstreckendes Stirnwandelement handeln, insbesondere um ein Stirnwandelement, das sich aus einem mittleren Fahrzeugbereich nach außen bis über die Säulen-Außenschalen und die Säulen-Innenschalen erstreckt. Alternativ oder in Ergänzung kann es sich um ein Zusatzelement handeln, das sich über mindestens 50 Prozent, mindestens 70 Prozent, mindestens 80 Prozent oder mehr als 80 Prozent der Fahrzeugbreite erstreckt. Durch die Verbindung des Zusatzelements mit dem Innenschalen-Anlageflansch und dem Außenschalen-Anlageflansch ergibt sich - nach der Montage des Türscharnier-Verstärkungselements - eine geschlossene Struktur, die auch bei Frontcrashlastfällen hohe Kräfte aufnehmen kann, ohne dass ein Aufspalten von Säulen-Innenschale und Säulen-Außenschale befürchtet werden muss.

In einer weiteren praktischen Ausführungsform einer erfindungsgemäßen Kraftfahrzeugkarosserie sind die Säulen-Innenschale und/oder die Säulen-Außenschale Teil einer Tür-Ringstruktur. Damit ist gemeint, dass die Säulen-Innenschale und/oder die Säulen-Außenschale fest mit weiteren Elementen verbunden sind, die insgesamt eine steife Tür-Ringstruktur bilden, welche sich um eine Türöffnung eines Kraftfahrzeuges erstreckt. Dadurch ergeben sich weitere Steifigkeitsvorteile, insbesondere in Verbindung mit Frontcrashlastfällen.

Es wurde vorstehend bereits darauf verwiesen, dass die Säulen-Innenschale und/oder die Säulen-Außenschale unterseitig an einen Seitenschweller angrenzend angeordnet sind.

Die Erfindung betrifft auch ein Verfahren zur Montage einer Kraftfahrzeugkarosserie mit einer Seitenteilstruktur umfassend zumindest teilweise eine Säulen-Außenschale, eine mit der Säulen-Außenschale verbundene Säulen-Innenschale und einem in einem Zwischenraum zwischen der Säulen-Außenschale und der Säulen-Innenschale angeordneten Türscharnier-Verstärkungselement, gemäß welchem die Säulen-Innenschale und die Säulen-Außenschale derart ausgebildet sind, dass der Zwischenraum in dem in Endmontagelage zueinander gebrachten Zustand der Säulen-Innenschale und der Säulen-Außenschale eine unmittelbar zu dem Bereich des Türscharnier-Verstärkungselements führende Zugangsöffnung aufweist, wobei die Zugangsöffnung in Fahrzeuglängsrichtung nach vorne orientiert und dadurch gebildet ist, dass die Säulen-Innenschale und die Säulen-Außenschale zumindest in einem sich über einen Teilbereich des Türscharnier-Verstärkungselements erstreckenden Horizontalschnitt eine u-förmige Geometrie aufweisen, wobei die Schenkel des "U" der Geometrie in Fahrzeuglängsrichtung nach vorne orientiert sind und wobei zur Montage des Türscharnier-Verstärkungselements das Türscharnier-Verstärkungselement über die Zugangsöffnung in dem Zwischenraum mittels Verschweißen oder Vernieten an der Säulen-Innenschale und/oder an der Säulen-Außenschale befestigt wird.

In einer praktischen Ausführungsform des erfindungsgemäßen Verfahrens wird die Zugangsöffnung in einem nachfolgenden Schritt durch Verbinden mit einem sich in Fahrzeugquerrichtung und in Fahrzeughochrichtung erstreckenden Zusatzelement verschlossen.

In einer weiteren praktischen Ausführungsform des erfindungsgemäßen Verfahrens weist die Säulen-Außenschale und/oder die Säulen-Innenschale an dem in Fahrzeuglängsrichtung betrachtet vorderen Ende einen sich in Fahrzeugquerrichtung und in Fahrzeughochrichtung erstreckenden Anlageflansch auf, wobei das Zusatzelement und die Säulen-Innenschale und/oder die Säulen-Außenschale durch Anlegen und Fixieren miteinander verbunden werden.

Auf die konkreten Möglichkeiten zur Umsetzung der erfindungsgemäßen Verfahren sowie die damit verbundenen Vorteile, welche vorstehend bereits in Verbindung mit der Kraftfahrzeugkarosserie beschrieben wurden, wird hiermit noch einmal verwiesen.

Weitere praktische Ausführungsformen der Erfindung sind nachfolgend im Zusammenhang mit den Zeichnungen beschrieben. Es zeigen:
- Fig. 1: ein Ausführungsbeispiel einer erfindungsgemäßen Kraftfahrzeugkarosserie mit einer Seitenteilstruktur in einer isometrischen Darstellung,
- Fig. 2: den in Figur 1 mit II gekennzeichneten Bereich in einer vergrößerten Darstellung,
- Fig. 3: eine Darstellung des in Figur 2 gezeigten Ausschnitts in einem Horizontalschnitt gemäß den Schnittlinien III-III in Figur 1 und
- Fig. 4: eine schematische Darstellung des Horizontalschnitts aus Figur 3 mit einem den Zwischenraum vorderseitig verschließenden Zusatzelement.

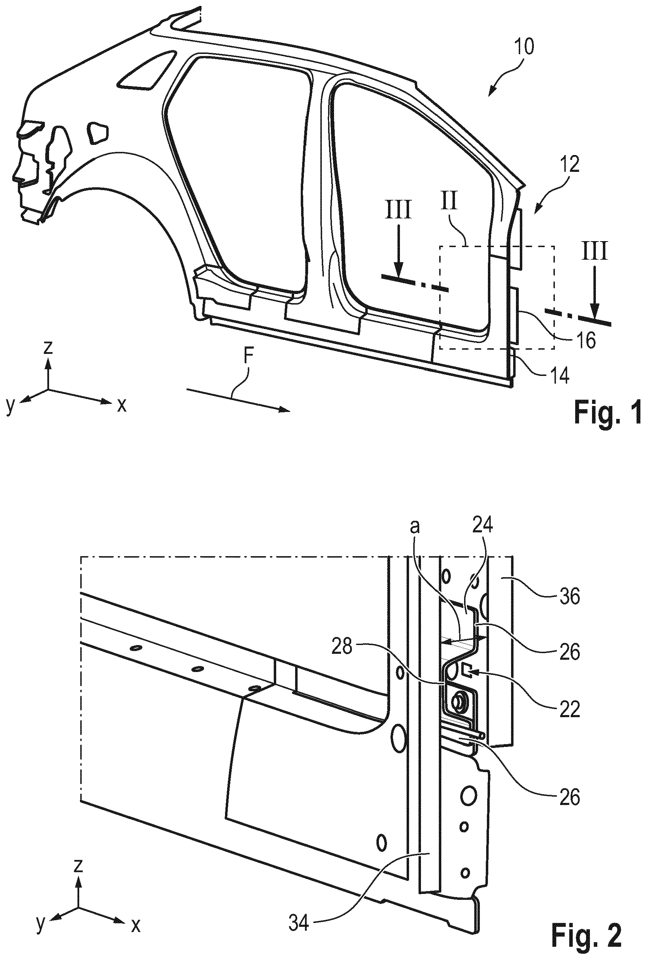

Figur 1 zeigt eine Kraftfahrzeugkarosserie 10 mit einer Seitenteilstruktur 12, die eine Säulen-Außenschale 14 und eine Säulen-Innenschale 16 umfasst. Wie in den Figuren 2 bis 4 gut zu erkennen ist, sind die Säulen-Außenschale 14 und die Säulen-Innenschale 16 derart relativ zueinander angeordnet, dass diese in Endmontagelage zueinander einen Abstand a aufweisen.

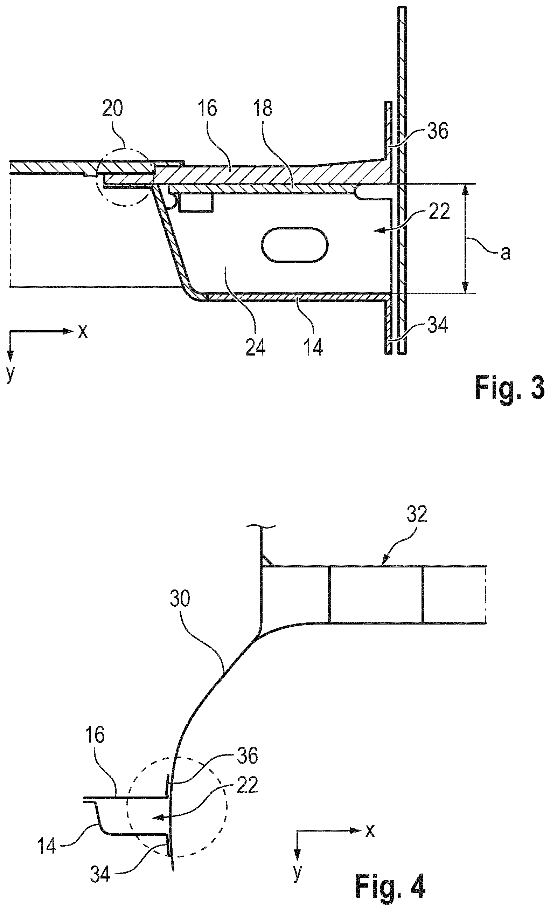

Dieser Abstand a ist in den Figuren 2 und 3 jeweils mit einem Doppelpfeil gekennzeichnet. Aufgrund des Abstandes a zwischen der Säulen-Außenschale 14 und der Säulen-Innenschale 16 ergibt sich zwischen der Säulen-Außenschale 14 und der Säulen-Innenschale 16 ein Zwischenraum 18, welcher in Figur 3 gestrichelt dargestellt ist. Wie in Figur 3 gut zu erkennen ist, erstreckt sich der Zwischenraum 18 in Fahrzeuglängsrichtung (x-Richtung) bis zu einem Bereich, wo die Säulen-Außenschale 14 und die Säulen-Innenschale 16 über einen Flansch 20 miteinander verbunden sind.

Über den Abstand a erstreckt sich eine Zugangsöffnung 22, die es ermöglicht, ein Türscharnier-Verstärkungselement 24, das in den Zwischenraum 18 eingesetzt ist, dort zu montieren, nachdem die Säulen-Außenschale 14 und die Säulen-Innenschale 16 bereits in Endmontagelage zueinander gebracht und miteinander verbunden wurden.

Wie in Figur 2 gut erkennbar ist, ist das Türscharnier-Verstärkungselement 24 in der gezeigten Ausführungsform als U-Profil ausgebildet und weist zwei Anlageflansche 26 sowie eine Deckfläche 28 auf. Die Anlageflansche 26 sind mit der Säulen-Innenschale 16 zur Anlage gebracht und fest mit dieser verbunden, insbesondere durch Verschweißen. Die Deckfläche 28 ist mit der Säulen-Außenschale 14 zur Anlage gebracht und fest mit dieser verbunden, insbesondere ebenfalls durch Verschweißen.

Aufgrund der guten Zugänglichkeit zu den Anlageflanschen 26 und zu der Deckfläche 28 ist es möglich, die Verbindung zwischen dem Türscharnier-Verstärkungselement 24 und der Säulen-Außenschale 14 sowie der Säulen-Innenschale 16 mit Hilfe eines Fertigungsverfahrens durchzuführen, das eine zweiseitige Zugänglichkeit erfordert. Insbesondere kann die Montage durch Punktschweißen mittels einer geeigneten Schweißzange durchgeführt werden oder alternativ durch Vernieten.

Figur 4 zeigt eine schematische Darstellung des Horizontalschnitts aus Figur 3 ohne das eingesetzte Türscharnier-Verstärkungselement (nicht dargestellt). Stattdessen ist in dieser Figur gut zu erkennen, dass die vorderseitige Zugangsöffnung 22 nach der Montage mit Hilfe eines Zusatzelements 30 verschlossen ist. Bei dem Zusatzelement 30 kann es sich insbesondere um ein Radhauselement handeln, das sich nur über einen kleinen Teilbereich, der sich in y-Richtung erstreckenden Breite des nicht dargestellten Kraftfahrzeugs erstreckt oder um ein wie hier dargestellt, sich über einen Großteil der Breite erschreckendes Element, das sich von der Seitenteilstruktur 12 bis zu einem Längsträger 32 des Kraftfahrzeuges und von diesem noch weiter in Richtung Fahrzeugmitte erstreckt. In der in Figur 4 dargestellten Ausführungsform erstreckt sich das Zusatzelement 30 über einen Großteil der Fahrzeugbreite bis zur gegenüberliegenden Seite, die symmetrisch zu der dargestellten Seitenteilstruktur ausgebildet ist, d.h. auf der gegenüberliegenden Fahrzeugseite ist eine weitere Seitenteilstruktur 12 spiegelsymmetrisch zu der in Figur 4 dargestellten Seitenteilstruktur 12 vorgesehen.

In den Figuren 2 bis 4 ist auch gut zu erkennen, dass an der Säulen-Außenschale 14 ein Außenschalen-Anlageflansch 34 ausgebildet ist, welcher sich am vorderseitigen Ende der Säulen-Außenschale 14 in Fahrzeugquerrichtung (y-Richtung) nach außen erstreckt. Ferner ist zu erkennen, dass an der Säulen-Innenschale 16 ein Innenschalen-Anlageflansch 36 ausgebildet ist, welcher sich in Fahrzeugquerrichtung (y-Richtung) nach Fahrzeuginnen erstreckt.

Der Innenschalen-Anlageflansch 36 und der Außenschalen-Anlageflansch 34 kommen mit dem Zusatzelement 30 flächig zur Anlage und bilden eine für Frontcrashlastfälle steife Struktur, die hohen Kräften und Momenten standhält.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

### Bezugszeichenliste

- 10: Kraftfahrzeugkarosserie
- 12: Seitenteilstruktur
- 14: Säulen-Außenschale
- 16: Säulen-Innenschale
- 18: Zwischenraum
- 20: Flansch
- 22: Zugangsöffnung
- 24: Türscharnier-Verstärkungselement
- 26: Anlageflansch
- 28: Deckfläche
- 30: Zusatzelement
- 32: Längsträger
- 34: Außenschalen-Anlageflansch
- 36: Innenschalen-Anlageflansch

## Patentansprüche

1. Kraftfahrzeugkarosserie mit einer Seitenteilstruktur (12) umfassend zumindest teilweise eine Säulen-Außenschale (14), eine mit der Säulen-Außenschale (14) verbundene Säulen-Innenschale (16) und ein in einem Zwischenraum (18) zwischen der Säulen-Außenschale (14) und der Säulen-Innenschale (16) angeordnetes Türscharnier-Verstärkungselement (24),
wobei die Säulen-Innenschale (16) und die Säulen-Außenschale (14) derart ausgebildet sind, dass der Zwischenraum (18) in dem in Endmontagelage zueinander gebrachten Zustand der Säulen-Innenschale (16) und der Säulen-Außenschale (14) eine unmittelbar zu dem Bereich des Türscharnier-Verstärkungselements (24) führende Zugangsöffnung (22) aufweist,
**dadurch gekennzeichnet,**
**dass** die Zugangsöffnung (22) in Fahrzeuglängsrichtung nach vorne orientiert und dadurch gebildet ist, dass die Säulen-Innenschale (16) und die Säulen-Außenschale (14) zumindest in einem sich über einen Teilbereich des Türscharnier-Verstärkungselements (24) erstreckenden Horizontalschnitt eine u-förmige Geometrie aufweisen, wobei die Schenkel des "U" der Geometrie in Fahrzeuglängsrichtung nach vorne orientiert sind.

2. Kraftfahrzeugkarosserie nach dem vorstehenden Anspruch, **dadurch gekennzeichnet, dass** die Säulen-Außenschale (14) und die Säulen-Innenschale (16) Teil einer A-Säule sind und das Türscharnier-Verstärkungselement (24) im unteren Bereich der A-Säule angeordnet ist.

3. Kraftfahrzeugkarosserie nach einem der vorstehenden Ansprüche, **dadurch gekennzeichnet, dass** das Türscharnier-Verstärkungselement (24) mittels einer Verbindungstechnik, die eine zweiseitige Zugänglichkeit erfordert, mit der Säulen-Außenschale (14) und/oder mit der Säulen-Innenschale (16) verbunden ist.

4. Kraftfahrzeugkarosserie nach einem der vorstehenden Ansprüche, **dadurch gekennzeichnet, dass** der Zwischenraum (18) in Fahrzeuglängsrichtung von vorne her zugänglich ist.

5. Kraftfahrzeugkarosserie nach einem der vorstehenden Ansprüche, **dadurch gekennzeichnet, dass** die Säulen-Außenschale (14) und/oder die Säulen-Innenschale (16) an dem in Fahrzeuglängsrichtung betrachtet vorderen Ende eine sich in Fahrzeugquerrichtung und in Fahrzeughochrichtung erstreckenden Anlageflansch (26) aufweist.

6. Kraftfahrzeugkarosserie nach einem der vorstehenden Ansprüche, **dadurch gekennzeichnet, dass** der Zwischenraum (18) zumindest im Bereich des Türscharnier-Verstärkungselements (24) im Endmontagezustand vorderseitig durch ein sich in Fahrzeugquerrichtung und in Fahrzeughochrichtung erstreckendes Zusatzelement (30) verschlossen ist.

7. Kraftfahrzeugkarosserie nach einem der vorstehenden Ansprüche, **dadurch gekennzeichnet, dass** die Säulen-Innenschale (16) und/oder die Säulen-Außenschale (14) Teil einer Tür-Ringstruktur sind oder die Säulen-Innenschale (16) und/oder die Säulen-Außenschale (14) unterseitig an einem Seitenschweller angrenzend angeordnet sind.

8. Verfahren zur Montage einer Kraftfahrzeugkarosserie (10) mit einer Seitenteilstruktur (12) umfassend zumindest teilweise eine Säulen-Außenschale (14), eine mit der Säulen-Außenschale (14) verbundene Säulen-Innenschale (16) und einem in einem Zwischenraum (18) zwischen der Säulen-Außenschale (14) und der Säulen-Innenschale (16) angeordneten Türscharnier-Verstärkungselement (24),
**dadurch gekennzeichnet,**
**dass** die Säulen-Innenschale (16) und die Säulen-Außenschale (14) derart ausgebildet sind, dass der Zwischenraum (18) in dem in Endmontagelage zueinander gebrachten Zustand der Säulen-Innenschale (16) und der Säulen-Außenschale (14) eine unmittelbar zu dem Bereich des Türscharnier-Verstärkungselements (24) führende Zugangsöffnung (22) aufweist, wobei die Zugangsöffnung in Fahrzeuglängsrichtung nach vorne orientiert und dadurch gebildet ist, dass die Säulen-Innenschale und die Säulen-Außenschale zumindest in einem sich über einen Teilbereich des Türscharnier-Verstärkungselements erstreckenden Horizontalschnitt eine u-förmige Geometrie aufweisen, wobei die Schenkel des "U" der Geometrie in Fahrzeuglängsrichtung nach vorne orientiert sind, wobei zur Montage des Türscharnier-Verstärkungselements (24) das Türscharnier-Verstärkungselement (24) über die Zugangsöffnung (22) in dem Zwischenraum (18) mittels Verschweißen oder Vernieten an der Säulen-Innenschale (16) und/oder an der Säulen-Außenschale (14) befestigt wird.

9. Verfahren nach dem vorstehenden Anspruch, **dadurch gekennzeichnet, dass** die Zugangsöffnung (22) in einem nachfolgenden Schritt durch Verbinden mit einem sich in Fahrzeugquerrichtung und in Fahrzeughochrichtung erstreckenden Zusatzelement (30) verschlossen wird.

10. Verfahren nach dem vorstehenden Anspruch, **dadurch gekennzeichnet, dass** die Säulen-Außenschale (14) und/oder die Säulen-Innenschale (16) an dem in Fahrzeuglängsrichtung betrachtet vorderen Ende einen sich in Fahrzeugquerrichtung und in Fahrzeughochrichtung erstreckenden Anlageflansch (26) aufweist, wobei das Zusatzelement (30) und die Säulen-Innenschale (16) und/oder die Säulen-Außenschale (14) durch Anlegen und Fixieren miteinander verbunden werden.

## Claims

1. Motor vehicle body with a side part structure (12) comprising at least in part a pillar outer shell (14), a pillar inner shell (16) connected to the pillar outer shell (14), and a door hinge reinforcing element (24) arranged in an intermediate space (18) between the pillar outer shell (14) and the pillar inner shell (16),
wherein the pillar inner shell (16) and the pillar outer shell (14) are designed such that the intermediate space (18) in the assembled state of the pillar inner shell (16) and the pillar outer shell (14) in the final assembly position has an access opening (22) leading directly to the region of the door hinge reinforcing element (24),
**characterized**
**in that** the access opening (22) is oriented forward in the vehicle longitudinal direction and is formed by the pillar inner shell (16) and the pillar outer shell (14) having a U-shaped geometry at least in a horizontal portion extending over a partial region of the door hinge reinforcing element (24), wherein the limbs of the 'U' of the geometry are oriented forward in the vehicle longitudinal direction.

2. Motor vehicle body according to the preceding claim,
**characterized in that** the pillar outer shell (14) and the pillar inner shell (16) are part of an A-pillar, and the door hinge reinforcing element (24) is arranged in the lower region of the A-pillar.

3. Motor vehicle body according to either of the preceding claims, **characterized in that** the door hinge reinforcing element (24) is connected to the pillar outer shell (14) and/or to the pillar inner shell (16) by means of a connection technique that requires two-sided accessibility.

4. Motor vehicle body according to any of the preceding claims, **characterized in that** the intermediate space (18) is accessible from the front in the vehicle longitudinal direction.

5. Motor vehicle body according to any of the preceding claims, **characterized in that** the pillar outer shell (14) and/or the pillar inner shell (16) has at the end which is at the front when viewed in the vehicle longitudinal direction a support flange (26) extending in the vehicle transverse direction and in the vehicle vertical direction.

6. Motor vehicle body according to any of the preceding claims, **characterized in that** the front of the intermediate space (18) is closed at least in the region of the door hinge reinforcing element (24) in the final assembly state by an additional element (30) extending in the vehicle transverse direction and in the vehicle vertical direction.

7. Motor vehicle body according to any of the preceding claims, **characterized in that** the pillar inner shell (16) and/or the pillar outer shell (14) are part of a door ring structure or the underside of the pillar inner shell (16) and/or the pillar outer shell (14) is arranged adjacent to a side sill.

8. Method for assembling a motor vehicle body (10) with a side part structure (12) comprising at least in part a pillar outer shell (14), a pillar inner shell (16) connected to the pillar outer shell (14), and a door hinge reinforcing element (24) arranged in an intermediate space (18) between the pillar outer shell (14) and the pillar inner shell (16),
**characterized**
**in that** the pillar inner shell (16) and the pillar outer shell (14) are designed such that the intermediate space (18) in the assembled state of the pillar inner shell (16) and the pillar outer shell (14) in the final assembly position has an access opening (22) leading directly to the region of the door hinge reinforcing element (24), wherein the access opening is oriented forward in the vehicle longitudinal direction and is formed by the pillar inner shell and the pillar outer shell having a U-shaped geometry at least in a horizontal portion extending over a partial region of the door hinge reinforcing element, wherein the limbs of the 'U' of the geometry are oriented forward in the vehicle longitudinal direction, wherein in order to assemble the door hinge reinforcing element (24), the door hinge reinforcing element (24) is attached to the pillar inner shell (16) and/or to the pillar outer shell (14) via the access opening (22) in the intermediate space (18) by welding or riveting.

9. Method according to the preceding claim, **characterized in that** the access opening (22) is closed in a subsequent step by connecting it to an additional element (30) extending in the vehicle transverse direction and in the vehicle vertical direction.

10. Method according to the preceding claim, **characterized in that** the pillar outer shell (14) and/or the pillar inner shell (16) has at the end which is at the front when viewed in the vehicle longitudinal direction a support flange (26) extending in the vehicle transverse direction and in the vehicle vertical direction, wherein the additional element (30) and the pillar inner shell (16) and/or the pillar outer shell (14) are connected to each other by being supported against each other and fastened together.

## Revendications

1. Carrosserie de véhicule automobile comportant une sous-structure latérale (12) comprenant, au moins partiellement, une coque extérieure de montant (14), une coque intérieure de montant (16) reliée à la coque extérieure de montant (14) et un élément de renfort de charnière de porte (24) agencé dans un espace intermédiaire (18) entre la coque extérieure de montant (14) et la coque intérieure de montant (16),
dans laquelle la coque intérieure de montant (16) et la coque extérieure de montant (14) sont conçues de telle sorte que l'espace intermédiaire (18) présente, à l'état amené dans la position d'assemblage final l'une par rapport à l'autre de la coque intérieure de montant (16) et de la coque extérieure de montant (14), une ouverture d'accès (22) menant directement à la zone de l'élément de renfort de charnière de porte (24),
**caractérisée en ce**
**que** l'ouverture d'accès (22) est orientée vers l'avant dans le sens longitudinal du véhicule et est formée **en ce que** la coque intérieure de montant (16) et la coque extérieure de montant (14) présentent, au moins dans une coupe horizontale s'étendant sur une zone partielle de l'élément de renfort de charnière de porte (24), une géométrie en forme de U, dans laquelle les branches du « U » de la géométrie sont orientées vers l'avant dans le sens longitudinal du véhicule.

2. Carrosserie de véhicule automobile selon la revendication précédente, **caractérisée en ce que** la coque extérieure de montant (14) et la coque intérieure de montant (16) font partie d'un montant A et l'élément de renfort de charnière de porte (24) est agencé dans la zone inférieure du montant A.

3. Carrosserie de véhicule automobile selon l'une des revendications précédentes, **caractérisée en ce que** l'élément de renfort de charnière de porte (24) est relié à la coque extérieure de montant (14) et/ou à la coque intérieure de montant (16) à l'aide d'une technique de liaison nécessitant un accès des deux côtés.

4. Carrosserie de véhicule automobile selon l'une des revendications précédentes, **caractérisée en ce que** l'espace intermédiaire (18) est accessible depuis l'avant dans le sens longitudinal du véhicule.

5. Carrosserie de véhicule automobile selon l'une des revendications précédentes, **caractérisée en ce que** la coque extérieure de montant (14) et/ou la coque intérieure de montant (16) présente, au niveau de l'extrémité avant vue dans le sens longitudinal du véhicule, une bride d'appui (26) s'étendant dans le sens transversal du véhicule et dans le sens vertical du véhicule.

6. Carrosserie de véhicule automobile selon l'une des revendications précédentes, **caractérisée en ce que** l'espace intermédiaire (18) est, au moins dans la zone de l'élément de renfort de charnière de porte (24) à l'état d'assemblage final, fermé à l'avant par un élément supplémentaire (30) s'étendant dans le sens transversal du véhicule et dans le sens vertical du véhicule.

7. Carrosserie de véhicule automobile selon l'une des revendications précédentes, **caractérisée en ce que** la coque intérieure de montant (16) et/ou la coque extérieure de montant (14) font partie d'une structure annulaire de porte, ou la coque intérieure de montant (16) et/ou la coque extérieure de montant (14) sont agencées côté inférieur de manière adjacente à un bas de caisse latéral.

8. Procédé d'assemblage d'une carrosserie de véhicule automobile (10) comportant une sous-structure latérale (12) comprenant, au moins partiellement, une coque extérieure de montant (14), une coque intérieure de montant (16) reliée à la coque extérieure de montant (14) et un élément de renfort de charnière de porte (24) agencé dans un espace intermédiaire (18) entre la coque extérieure de montant (14) et la coque intérieure de montant (16),
**caractérisé en ce**
**que** la coque intérieure de montant (16) et la coque extérieure de montant (14) sont conçues de telle sorte que l'espace intermédiaire (18) présente, à l'état amené dans la position d'assemblage final l'une par rapport à l'autre de la coque intérieure de montant (16) et de la coque extérieure de montant (14), une ouverture d'accès (22) menant directement à la zone de l'élément de renfort de charnière de porte (24), dans lequel l'ouverture d'accès est orientée vers l'avant dans le sens longitudinal du véhicule et est formée **en ce que** la coque intérieure de montant et la coque extérieure de montant présentent, au moins dans une coupe horizontale s'étendant sur une zone partielle de l'élément de renfort de charnière de porte, une géométrie en forme de U, dans lequel les branches du « U » de la géométrie sont orientées vers l'avant dans le sens longitudinal du véhicule, dans lequel lors de l'assemblage de l'élément de renfort de charnière de porte (24), l'élément de renfort de charnière de porte (24) est fixé, par l'intermédiaire de l'ouverture d'accès (22) dans l'espace intermédiaire (18), par soudage ou rivetage, à la coque intérieure de montant (16) et/ou à la coque extérieure de montant (14).

9. Procédé selon la revendication précédente, **caractérisé en ce que** l'ouverture d'accès (22) est fermée, au cours d'une étape ultérieure, par liaison avec un élément supplémentaire (30) s'étendant dans le sens transversal du véhicule et dans le sens vertical du véhicule.

10. Procédé selon la revendication précédente, **caractérisé en ce que** la coque extérieure de montant (14) et/ou la coque intérieure de montant (16) présentent, au niveau de l'extrémité avant vue dans le sens longitudinal du véhicule, une bride d'appui (26) s'étendant dans le sens transversal du véhicule et dans le sens vertical du véhicule, dans lequel l'élément supplémentaire (30) et la coque intérieure de montant (16) et/ou la coque extérieure de montant (14) sont reliés par mise en place et fixation.
